# EUROPEAN PATENT APPLICATION

(11) **EP 2 205 010 A1**
(43) Date of publication of application: **07.07.2010**
(21) Application number: 09250017.2
(22) Date of filing: 06.01.2009
(51) Int. Cl.: H04W 4/12, G10L 13/04, G10L 15/18, H04M 1/725, G10L 19/00

(54) **Messaging**

(71) Applicant: BRITISH TELECOMMUNICATIONS public limited company, London EC1A 7AJ (GB)
(72) Inventor: The designation of the inventor has not yet been filed
(74) Representative: Lloyd, Barry George William

(57) **Abstract**

A text message is, upon receipt, to be delivered via a speech synthesiser. In order to enable the message to be spoken with the voice of the originator, the text message is received along with information identifying the originator of the message, and the synthesiser uses a stored voice profile corresponding to the originator of the text message. The stored profile is created as follows. A voice call or message is received and is analysed generate a voice profile which is then stored in a store of voice profiles, along with information identifying the originator of the call or message.

## Description

Word messaging is widely used by mobile network nowadays, due to cheap costs for both service providers and end-users and fast transmissions. World messaging is therefore exploited in many forms, such as Short-Messaging-Services (SMS), paging services, and E-mails. However, word messaging is not a user-friendly service as it shows merely plain text which excludes emotion, feeling, and voice of sender that is important in rendering a message.

Voice messages have been introduced by mobile service providers. Maxis and Sprint, for example, are providing Voice SMS. Rather than transferring word messages, a voice clip would be recorded and sent through the network. At the other end, user would receive a complete voice message and play it directly from phones. However, this method is not preferred to be used widely because it consumes a lot of bandwidth, resources and subsequently results in costly price.

In order to solve this, a text-to-speech converter has been suggested(see Mekuria, Fisseha, Mobile Terminal with a text-to-speech converter, U.S. patent application 2002/0034956, March 2002). The text-to-speech converter would convert transmitted text messages to audible form when the user receives an SMS message. As such, this has reduced bandwidth and is more economic to be used. Nokia is currently providing text-to-speech features. Nevertheless, text is usually read by a default male or female voice. As such, reading text by a default male or female voices conjure a strange feeling to listener. He/she might feel weird when someone that he/she doesn't know is reading the message. Furthermore, few choices of voices given by service provider would cause the user to feel strange feeling when listening to some other people voice which he/she dislikes.

It has also been proposed (see Andrew Walker, Speech Synthesis, U.S. patent application 2002/0013708, Jun 2002) to provide a method of converting text message into synthesized speech where a speech synthesis template has been used. By attaching the speech synthesis template into applications, a recipient could be able to listen to text messages in voices which correspond to the senders of the messages. However, transferring a speech synthesis template is consuming costs and bandwidth. Moreover, this consumes device processor memory where checking and synchronization works are needed before each text-to-speech conversion is carried on. On the other hand, another system has been designed to use "tag" to attach user's name, background audio, as well as emotion in text messages. Nevertheless, an additional server - a dedicated server is needed to convert text-to-speech, which could lead to delay in transferring text message for end users and high cost for service providers.

See also Van Kommer, Robert, System and method for converting text messages prepared with mobile equipment into voice messages, European Patent Application, EP1411736, October 2002.

The present invention is defined in the claims.

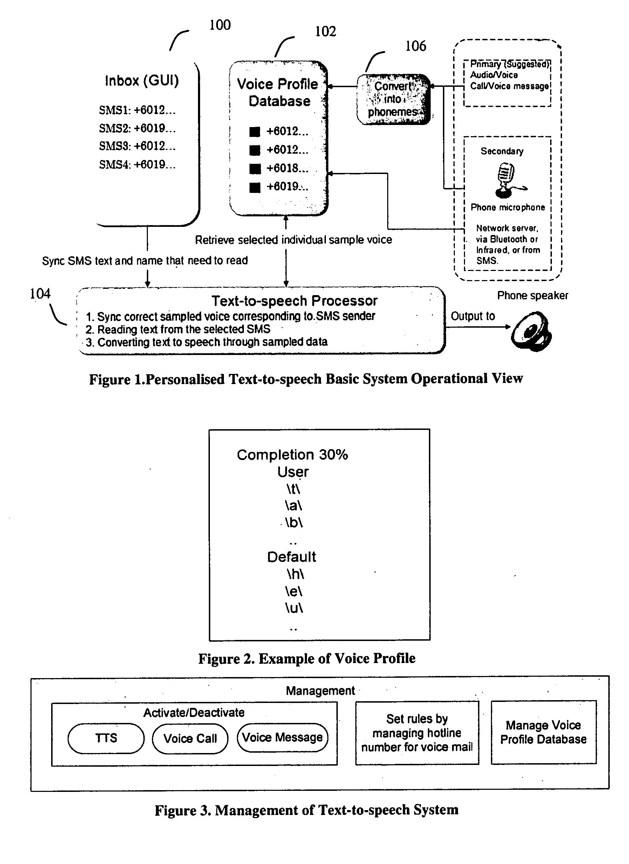

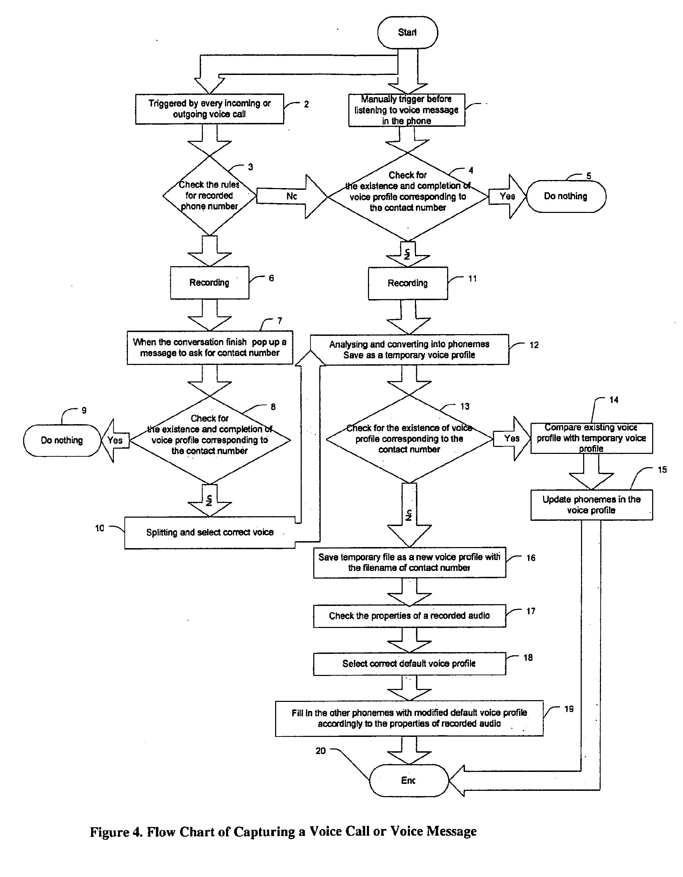

In this example of the invention, we are going to use short-messaging-services (SMS) as an example of word messaging. However, the same principles can be applied to other word messaging formats too. Figure 1 illustrates the basic system operation of our implementation. This shows how personalised text-to-speech works within a mobile phone environment. The idea is that an SMS message would be read out by the sender's original voice rather than a default male/female voice. Messages are stored in an inbox database 100, which is a standard component of a conventional mobile phone and, with the aid of a voice profile database 102, are read out by a text-to-speech processor 104.

The necessary voice profiles of other users are generated by an analysis unit 106, described in more detail below; this serves to analyse the content of voice call or a voice message and generate the necessary parameters for driving the text-to-speech processor 104.
Figure 2 shows the flowchart of capturing a voice call and voice message.

For capturing speech through a voice call, the process is triggered automatically by every incoming or outgoing call (2). On the other hand, this invention is able to generate voice profile [ parameters] from a voice message too. There are two types of voice messages - voice messages that are received and stored in the phone itself and voice messages that are stored remotely and can therefore be listened to only by dialling the hotline of the service provider. For a voice message that is received and stored in the phone, user can manually trigger the process to process the voice message (1). Meanwhile, for a voice message that is retrievable by dialling the hotline of the service provider, this means that an outgoing call is set up. A check 3 is performed to allow special treatment for such cases (see below). In the case of a normal incoming or outgoing call, where the originating number or (as the case may be) called number is known, or the case of a locally-stored voice message, the process is the same and continues from step 4.

Not every call or message is analysed in the process. Every voice call and message is checked (2) for the existence *and* completion of a voice profile corresponding to the particular contact number of voice call or message. The call or voice message will not be analysed if a voice profile exists in the database and contains all the phonemes for the user (5). A voice profile consists of all the phonemes of a language. In the case of an incomplete profile, where limited phonemes are found in a voice call or voice message, altered phonemes from a default template can be used to fill in those missing phonemes (19). Then, the voice profile can be updated the next time a call or message is received from the same person (Step 15 on a subsequent iteration). In the meantime, whilst waiting and collecting all the phonemes from a real speaker, text to speech can also be read out using this mixture of real phonemes from the speaker and replica phonemes for the speaker. Hence, the completion percentage will be checked. Completion of 100% is the ideal case where the user voice profile has covered all phonemes. However, as a matter of fact, some phonemes are rarely spoken. Thus, a completion of 60% is acceptable to be set as a target of the testing. However, this percentage could be change accordingly to the effectiveness of the conversion.

In the case of an incomplete or nonexistent voice profile, the voice call or voice message is recorded 11 or 6 and stored in a buffer. Only the telephony downlink is recorded and is not mixed with voice from the device microphone. After that, the recorded voice can be analysed 12 and converted into a small chunk of phonemes directly. A phoneme is a small set of speech unit in sound system of a language, such as /t/ for "tick", and "tackle" in English. Figure 3 shows example of an English phonemes voice profile. Phonemes will be recognized by using an algorithm, for example Markov Model [1], which is up to 80% of accuracy. After that the phonemes are recorded and saved as a temporary voice profile.

Next, the system checks whether the database already contains a voice profile for the corresponding contact number (13). For a first time caller who has no existing voice profile in the database, the temporary file will be saved as a new voice profile with a filename of the contact number (16). As discussed above, due to insufficiency of phonemes from the recorded voice, additional replica phonemes may be needed, in the first-tie analysis, to fill in the missing voice profile temporarily to enable full flow of text-to-speech conversion. To create replica phonemes, the properties of the recorded audio are obtained (17), such as baseline pitch, pitch range, speaking rate etc., which will provide useful information to convert the default voice template into one that is as similar as possible to the desired speaker's voice. Furthermore, an appropriate default voice profile is can be selected (18) accordingly to different characteristics of the speaker, such as gender, and language (e.g. UK-English, Chinese Mandarin, Indian). Subsequently, the selected voice profile will be modified accordingly to the properties of the recorded voice. Then, missing phonemes can be filled in (19) using phonemes of the modified default voice profile. On the other hand, if a voice profile already exists in the voice profile database 104, the existing voice profile is compared (14) with the temporary voice profile. Any phonemes in the existing voice profile that were created from the default profile (or that are missing from the existing voice profile), that are present in the temporary profile are updated with the new recorded phonemes while the existing "real" phonemes remain. In this way, the voice profile will be renewed with more of the original person's phonemes and enhance the effectiveness of the text-to-speech conversion.

We return to the question of generating a voice profile from voice mail box at a remote server. The user of the mobile phone makes an outgoing call to retrieve the message. A problem arises when the server uses a recorded operator voice to direct the user to his mail box - two recorded voices are present. To solve the problem, the user can set rules in the system (3) so that any outgoing call for the mailbox number will be recorded and analysed in an alternative way. First , the call is recorded (6). Then, before solving the problem of two sounds in the recorded voice, the contact number for the person who left the message is needed (7), after recording the voice, as this number is neither the called number nor the calling number of the call that the user makes to the hotline number of the service provider. After obtaining the contact number, checking is carried out (8) for the existence and completion of voice profile, which is similar to step 4. After that, if the profile is found to be complete, no further action is taken (9). If, on the other hand, the voice profile does not exist or the voice profile is not complete, then the two voices need to be separated (10). The voice separation uses the technique of checking the changing properties of two voices. Besides that, user will be prompted to select correct voice from two voices (voice of the operator and voice from mail box). Consequently, a clean voice from the mail box is channelled into the phonemes recognition algorithm (12) as discussed above. The procedure thereafter is then as previously described

The purpose of obtaining the voice profile from a voice call or voice message is to save costs and bandwidth as users do not then need to attach a voice profile to text messages to recipients. Hence, applicant does not need to record his voice or his friend's voice purposely from microphone, in order to construct a voice profile. As such, this method is transparent for the end user and easy to use. Another advantage is lesser device processor memory consumption where it does not require checking occasionally if the applicants own specified voice profile for every text messaging. Therefore, it has saved all the synchronization and checking works and resulted in a running-smooth application. Nevertheless, for the ease of users, two methods are suggested to provide voice profiles - through microphones and download from network server. User may deliberately use these two methods if is needed.

A management graphic interface may be provided for the user to modify, make rules and control the text-to-speech system. Firstly, the user could activate or deactivate text-to-speech conversion for messages, auto triggering for voice calls, as well as manual triggering for voice message through this management system. Next, he could manage the contact numbers of voice mail by inserting or deleting new contact numbers. Besides that, he is also able to manage the voice profile database by listening to a sample of voice and deleting any voice profile that is corrupted by noise, as if the callee or caller may be located at a noisy environment during the conversation. this seriously affects the output of the text-to-speech conversion. Therefore, user has the right to delete any noisy voice profile.

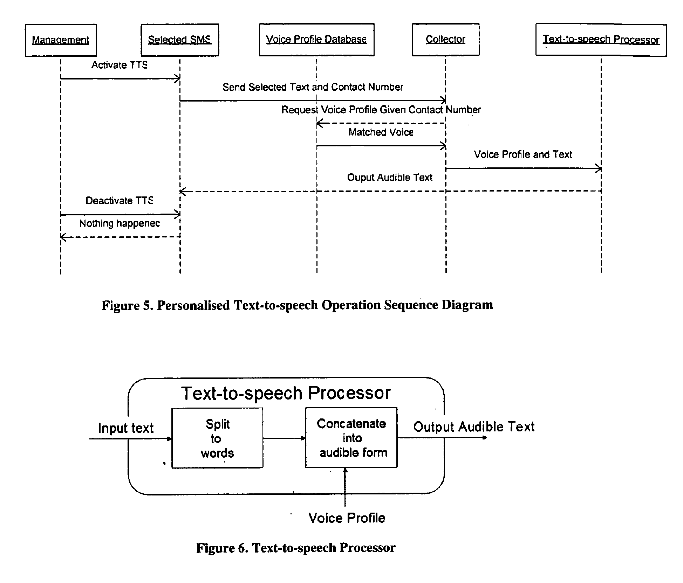

Figure 5 above illustrates more detail on the sequence of events that takes place when text-to-speech conversion takes place. Once the configuration of management is activated, the selected SMS message would be read out whenever the user scrolls down/up in the inbox. When a particular SMS message is selected, selected text and contact number is sent to a collector in the text-to-speech processor. At this point, the collector would send a request, which is tagged with the contact number, to the voice profile database. After the collector has received the voice profile from the database, the voice profile is sent to the text-to-speech processor, together with the text. The text-to-speech processor would analyse the voice profile and convert into speech from text. Text would be read out and the system would wait for the next SMS message to be selected.

Figure 6 shows a functional block diagram of the text-to-speech processor. Initially, messages would be split into different words accordingly to different symbols, such as space, full stop and comma. Fragmented words would be matched with phonemes from the voice profile, and then be concatenated into words and sentences. Concatenation is an operation of joining two or more phonemes into words or sentences. For example, the word "hello" consists of four phonemes: h eh I oe. Consequently, the full text would be read out and output through the loudspeaker of the phone.

There are basically two types of speech synthesis, concatenative synthesis and formant synthesis. Either method can be used, though in this example we have used concatenative synthesis in which each basic speech unit - typically a phoneme - is represented by a short recording of real speech. The voice profile consists of a set of these recordings and, in the synthesis process, the text to be spoken is translated into a sequence of phonemes and then copies of the recordings are concatenated to form the output speech. Analysis of the buffered speech, to generate the entry for the voice profile database can be done using the Markov Model described by Sitaram in Reference [1]. The Sitaram method can be used to partition the incoming speech into segments each matching a particular phoneme and them one can make the profile by storing one recording for each phoneme. We can separate and record the individual phonemes into the voice profile after identifying statistical duration information of each phonemes. In other words, the recorded speech will be divided into small chunks in the relationship of duration of phonemes. This could done by using phone duration distribution models[2] to analyse the duration of each phonemes. Subsequently, the divided small chunks of speech will be labelled accordingly to the recognized phonemes and stored as a voice profile.
[1] Phoneme Recognition in Continuous Speech Using Large Inhomogeneous Hidden Markov Models. R.N. V. Sitaram and T.V. Sreenivas, Department of Electrical Communication Engineering, India Institute of Science.
[2] Duration Modeling Techniques for Continuous Speech Recognition, Janne Pylkk¨onen and Mikko Kurimo, Neural Networks Research Centre, Helsinki University of Technology, Finland.

## Claims

1. A method of receiving text messages comprising
receiving a voice call or message;
analysing the voice call or message to generate a voice profile;
storing the voice profile in a store of voice profiles, along with information identifying the originator of the call or message;
receiving a text message along with information identifying the originator of the message;
converting the message to speech by means of a text-to-speech synthesiser using the stored voice profile corresponding to the originator of the text message.

2. A method according to claim 1 in which, in the event that the corresponding voice profile is incomplete, supplementing it by information from a default voice profile.

3. A method according to claim 2 including adjusting the properties of the phonemes of the default profile in accordance with voice characteristics determined for the received voice call or message.

4. A method according to claim 1, 2 or 3 including, upon receipt of a voice call or message, determining whether the store contains a voice profile in respect of the originator of the call or message and
(a) if there is no such profile, analysing the voice call or message to generate a voice profile;
(b) if there is such a profile that is incomplete, analysing the voice call or message to generate a further data to add to the voice profile to replace phonemes created by using default voice profile

5. A message receiving device comprising
a buffer for storing received text messages and information as to the origin of the message;
a store for storing voice profiles; and
a text-to-speech synthesiser operable in accordance with a voice profile, from the store, corresponding to the origin of the message to read out a text message from the buffer;
**characterised by**
a voice receiver; and
an analyser operable to analyse an incoming voice call or message and to create or update a voice profile corresponding to the originator thereof.

6. A device according to claim 5 in which the analyser is operable, in the event that the corresponding voice profile is incomplete, to supplement it by information from a default voice profile.

7. A device according to claim 6 in which the analyser is operable to determine voice characteristics for the incoming voice call or message and including means for adjusting the properties of the phonemes of the default profile in accordance with those characteristics.

8. A method according to claim 5, 6 or 7 in which the analyser is operable, upon receipt of a voice call or message, to determine whether the store contains a voice profile in respect of the originator of the call or message and
(a) if there is no such profile, analyse the voice call or message to generate a voice profile;
(b) if there is such a profile that is incomplete, analyse the voice call or message to generate a further data to add to the voice profile to replace phonemes created by using default voice profile.
